# EUROPEAN PATENT SPECIFICATION

(11) **EP 1 321 021 B1**
(45) Date of publication and mention of the grant of the patent: **07.02.2007**
(21) Application number: 02080354.0
(22) Date of filing: 18.12.2002
(51) Int. Cl.: A01D 34/00

(54) **Insertable and removable mulching unit for lawn mower machine**
Einsetzbare und entfernbare Mulcheinheit für Rasenmäher
Unité déchiqueteuse insérable et enlevable pour tondeuse à gazon

(30) Priority: 19.12.2001 IT MI20012691
(43) Date of publication of application: 25.06.2003
(73) Proprietor: GGP Italy S.p.A., 31033 Castelfranco Veneto (TV) (IT)
(72) Inventor: Ferrari, Maurizio, 20144 Milano (IT)
(74) Representative: Mittler, Enrico

(56) References cited:
- EP-A- 0 664 945
- EP-A- 0 981 943
- WO-A-94/10827
- DE-A- 19 838 769
- US-A- 4 435 949

## Description

The present invention concerns an insertable and removable mulching unit for lawn mower machine, this term meaning both lawn mowers that are pushed by a user as well as those with seated driver (normally called "small tractors"), as known from document EP 0 981 943.

Usual lawn mower machines comprise one or more cutting blades that, by rotating inside a case called "cutting plate", have the double task to carry out the cutting of the grass and to convey the cut grass toward an expulsion conveyor with which usually, but not necessarily, a rigid bag for the collection of the grass is connected.

In some cases the possibility is provided to close the access to the expulsion conveyor so as to force the grass to remain inside the case in order to carry out the so-called "mulching " or "crumbling", that is the subdivision of the grass in tiny parts that are then uniformly distributed on the ground in order to facilitate its decomposition.

In order to convert a lawn mower machine from the simple cut with or without collection of the cut grass to the "mulching" function, it is necessary to associate to the cutting plate an appropriated "mulching" unit.

Different types of units are currently known that are usable in order to confer to a normal lawn mower machine the "mulching" function.

For instance, one of them provides that a deflector plate made up of several parts gets fastened to the cutting plate by means of screws or similar. In other cases it is also necessary to replace the cutting blade with a specific one for the "mulching" function.

In both cases, in order to accede to the cutting plate and to execute the conversion operation it is necessary to lift the lawn mower machine and to execute operations that require the intervention of a specialist with long installing times.

A solution is also known that provides the removal of the expulsion conveyor and the difficult introduction of the "mulching" unit, since not guided.

Scope of the present invention has been to provide a mulching or "crumbling" unit for lawn mower machine (pushed by a user or with seated driver) that does not require any operation of assembly and disassembly of the components of the lawn mower machine, does not require the use of screws or similar and relative operating tools, is easily insertable and removable without having to lift the lawn mower machine, finally occupies a limited space, is simple and cheap.

According with the invention such scope has been attained with a mulching or "crumbling" unit characterised in that it comprises a deflector plate insertable in the cutting plate by sliding along the expulsion conveyor, an elongated bar for the operation of insertion and removal of said deflector plate, an elastic articulated joint for connection between one end of said bar and said deflector plate and elastic hooking means between a handle located at the other end of said bar and the frame of the machine.

The elastic articulated joint between the bar and the deflector plate makes possible the easy and quick insertion of the deflector plate inside the cutting plate, as also its removal from it, by making it slide inside the expulsion conveyor which ever is the profile of the latter.

To come to the point, the conveyor acts as a guide for the insertion and the removal of the deflector plate, possibly with the additional aid of a pair of guiding bars fastened to the cutting plate.

There is no need for screws or similar and relative tools, it is not necessary to lift the lawn mower machine neither to take apart and to reassemble machine components. The operation of insertion and removal can be directly carried out by the user in a simple and quick way and without having to resort to skilled personnel.

The characteristics of the present invention will be best understood through the following detailed description of an embodiment thereof which is illustrated in the enclosed drawings, in which:
Figure 1 schematically shows, in position of minimum cutting height, the set made up of the cutting plate and the expulsion conveyor of a lawn mower machine in which a "mulching" unit according to the present invention is inserted;
Figure 2 shows the same set in position of maximum cutting height;
Figure 3 schematically shows in bottom plan the position assumed by the "mulching" unit inside the cutting plate;
Figure 4 shows the deflector plate and the cutting plate as sectioned transversally according to the line IV-IV of Figure 3;

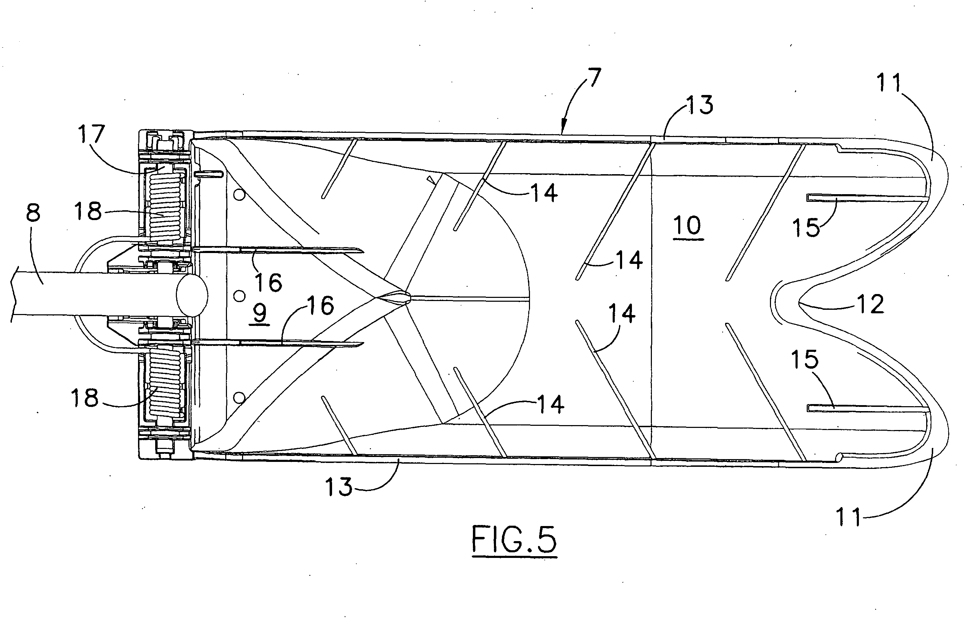

Figure 5 shows in magnified scale, in top plan, the deflector plate of the aforesaid "mulching" unit;
Figure 6 shows in magnified scale, in partially sectioned side view, the elastic articulated joint provided between the deflector plate and the operating bar of the "mulching" unit in the previous Figures.

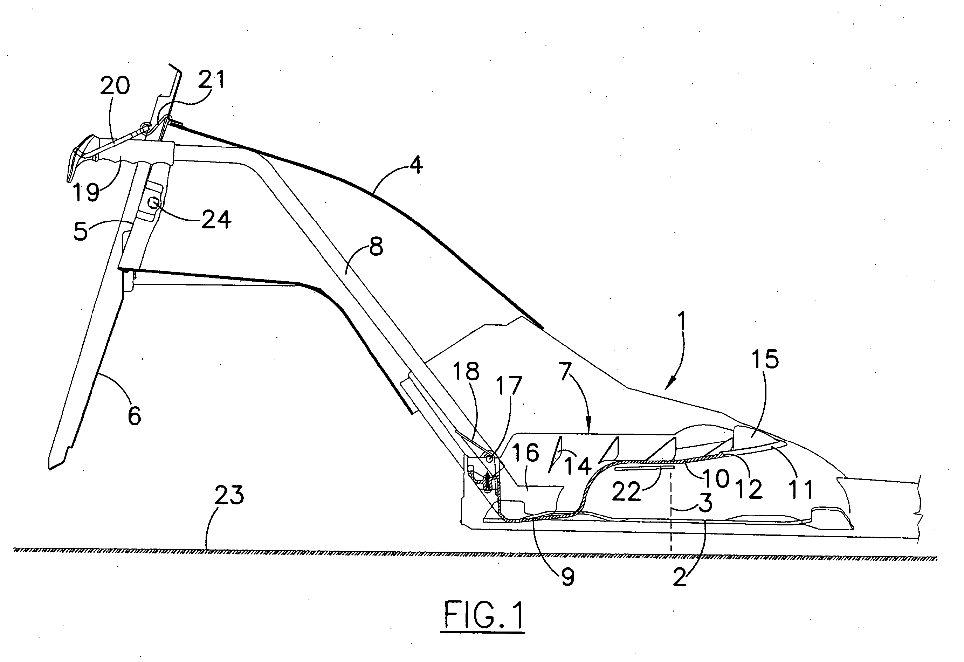

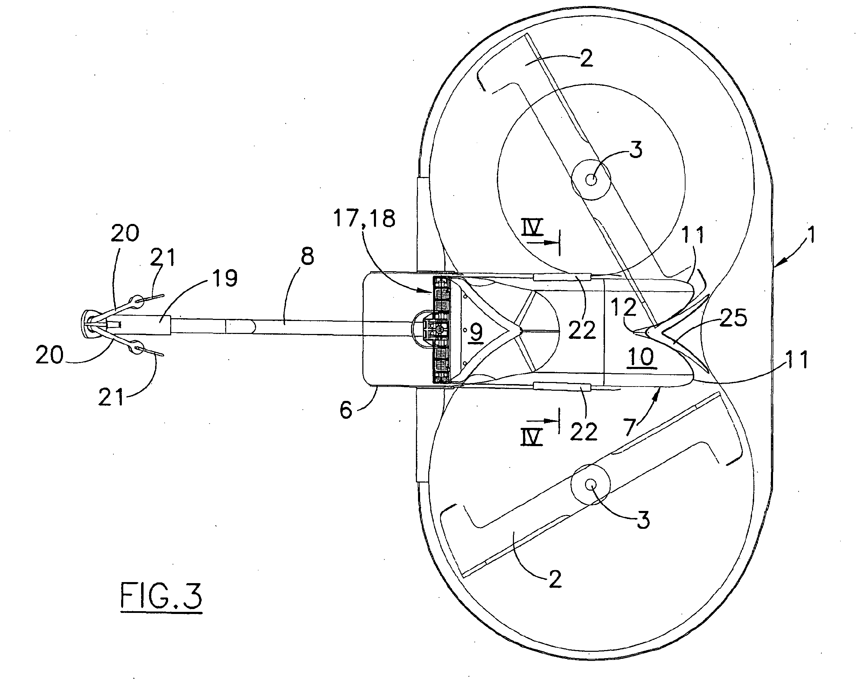

In Figures 1, 2 and 3 there are schematically represented and indicated by 1 the cutting plate of a lawn mower machine, for instance of the double-bladed type, inside which two cutting blades 2 are capable to rotate in mutually opposite senses around respective vertical axes 3.

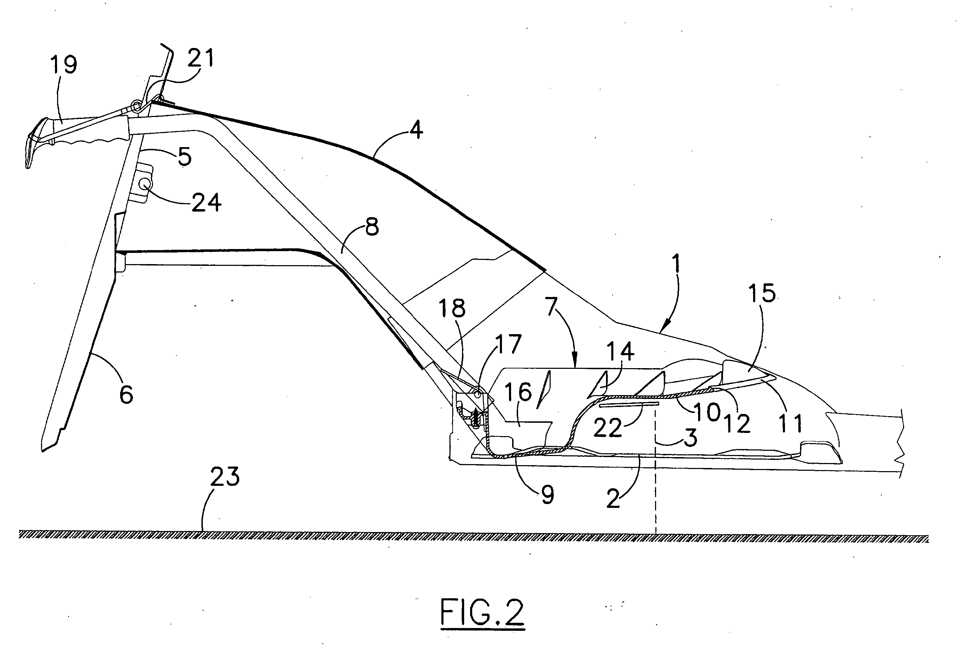

The cutting plate 1 is adjustable in height between the position of minimum cutting height in Figure 1 and the position of maximum cutting height in Figure 2 and in a back zone intermediate between the two blades of cut it has an expulsion conveyor 4, that provides to the conveying of the cut grass towards an output mouth 5 obtained in a back plate 6. A rigid collection bag (not shown) is connectable with the back plate 6.

In order to convert the lawn mower machine from the normal cutting and collection or expulsion function to the crumbling or "mulching" function the use of a "mulching" unit made up of a deflector plate 7 and an elongated bar 8 opportunely shaped as a function of the shape of the conveyor 4 is provided.

The deflector plate 7 has a spoon-shaped casing with a bottom wall that rises as a step from a lower back part 9 to a higher front part 10 ending with a two-tip end 11 with intermediate recess 12 and a pair of sidewalls 13 from which several pairs of oblique reinforcing fins 14 extend towards the inside. Two fins 15 extend in parallel towards the inside from the two tips 11 and have function of resting onto the cutting plate 1; two additional reinforcing fins 16 extend towards the inside from the back wall of the deflector plate. The bottom part 9 of the bottom wall of the deflector plate is shaped so as to define a triangular shape conveyor, whose functions will be explained hereinafter.

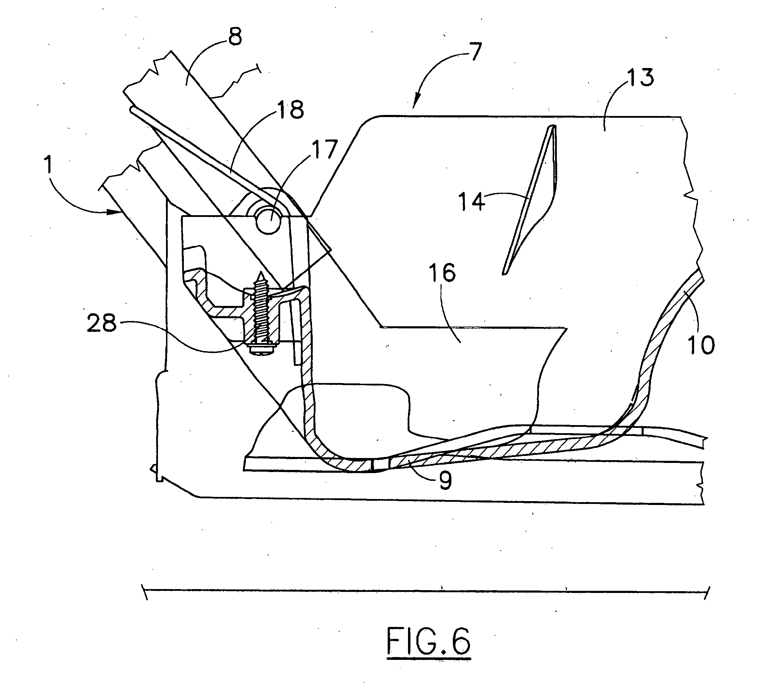

The bar 8 has a fore end connected with the deflector plate 7 through an articulated joint 17 onto which a double torsion spring 18 operates. A screw 28 (Figure 6) prevents when in screwed position, and allows when in unscrewed position, to bend the bar 8 over onto the deflector plate 7.

At the back end of the bar 8 a handle 19 is attached, which projects from the output mouth 5 of the conveyor 4 and has a pair of elastic rods 20 with terminal hooks 21 for its anchorage to the back plate 6.

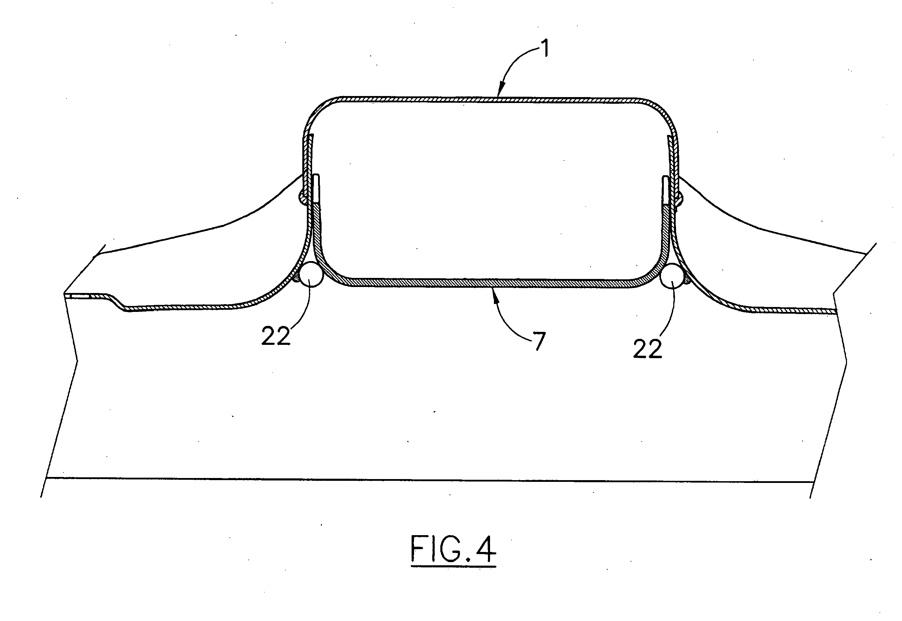

By operating on the handle 19 and therefore on the bar 8 and by taking advantage of the articulated joint 17 with the spring 18 it is possible to make the deflector plate 7 slide inside the conveyor 4, that serves as a guide, so as to lead the deflector plate 7 inside the cutting plate 1, as shown in Figure 1. The two small guiding bars 22 fastened to the cutting plate 1 (Figures 1-4) facilitate the insertion and maintain the exact positioning of the deflector plate inside the cutting plate, where the fore end 11, 12 of the deflector plate 7 matches with a front conveyor 25 fastened to the cutting plate 1 and the triangular conveyor 9 of the same deflector plate 7 creates an ideal path for the mulching of the grass and in addition prevents the stagnation of the grass and favours the cleaning of the cutting plate. The deflector plate 7 thus positioned prevents the cut grass from reaching the expulsion conveyor 4.

With the deflector plate 7 inserted in the cutting plate 1 it is possible to adjust the cutting height by operating in the usual way on the cutting plate 1, which gets lifted and lowered as regards the ground 23, together with the blades 2, between the two positions of minimum and maximum cutting height of Figures 1 and 2. The conveyor 4 follows the movement by rotating around a hinge 24.

The elastic rods 20 maintain through the bar 8 the deflector plate 7 in the correct working position, by absorbing the axial displacement due to the variation of the cutting height.

## Claims

1. Crumbling or "mulching" unit for a lawn mower machine comprising a frame provided with cutting plate (1), at least one cutting blade (2) rotating below said plate (1) and an expulsion conveyor (4) communicating with the inside of said cutting plate (1) in order to convey the cut grass towards an output mouth (5), comprising a deflector plate (7) insertable into the cutting plate (1) by sliding along the expulsion conveyor (4), an elongated bar (8) for the operation of insertion and removal of said deflector plate (7), **characterized in that** it comprises an elastic articulated joint (17, 18) for connection between one end of said bar (8) and said deflector plate (7) and elastic hooking means (20) between a handle (19) located at the other end of said bar (8) and the frame of the machine.

2. Mulching unit according to claim 1, **characterized in that** said handle (19) is provided with elastic rods (20) for its anchorage to the machine.

3. Mulching unit according to claim 1, **characterized in that** said elastic articulated joint (17, 18) includes a screw (28) suitable to prevent or to allow, depending on its state, the bending of said bar (8) over onto said deflector plate (7).

4. Mulching unit according to claim 1, **characterized in that** said deflector plate (7) has a fore end (11, 12) substantially with a V-shape, suitable for coupling with a corresponding conveyor (25) fastened to the cutting plate (1).

5. Mulching unit according to claim 4, **characterized in that** said deflector plate (7) has a back end provided with a triangular conveyor (9) aligned and opposed to said V-shaped end (11, 12).

## Patentansprüche

1. Zerkrümel- oder "Mulch"-Einheit für einen Rasenmähmaschine mit einem Gestell, dass mit einer Schneidplatte (1) versehen ist, zumindest einem Schneidmesser (2), das sich unter der Platte (1) dreht, und einem Auswurfförderer (4), der mit dem Innern der Schneidplatte (1) in Verbindung steht, zum Befördern des geschnittenen Grases zu einer Ausgangsöffnung (5) hin, welche eine Ablenkplatte (7) aufweist, die in die Schneidplatte (1) einführbar ist durch Gleiten entlang des Auswurfförderers (4) und eine lang gestreckte Stange (8) für den Vorgang des Einführens und Entfernens der Ablenkplatte (7), **dadurch gekennzeichnet, dass** sie ein elastisches Gelenk (17, 18) aufweist für die Verbindung zwischen einem Ende der Stange (8) und der Ablenkplatte (7) und ein elastisches Einhängmittel (20) zwischen einem Griff (19), der an dem anderen Ende der Stange (8) angeordnet ist, und dem Maschinengestell.

2. Mulcheinheit nach Anspruch 1, **dadurch gekennzeichnet, dass** der Griff (19) mit elastischen Stäben (20) versehen ist zu seiner Befestigung an der Maschine.

3. Mulcheinheit nach Anspruch 1, **dadurch gekennzeichnet, dass** das elastische Gelenk (17, 18) eine Schraube (28) beinhaltet, die geeignet ist in Abhängigkeit von ihrem Zustand das Umbiegen der Stange (8) auf die Ablenkplatte (7) zu verhindern oder zu erlauben.

4. Mulcheinheit nach Anspruch 1, **dadurch gekennzeichnet, dass** die Ablenkplatte (7) ein Vorderende (11, 12) aufweist, welches im Wesentlichen eine V-Form hat und geeignet ist zur Kupplung mit einem entsprechenden Fördermittel (25), das an der Schneiplatte (1) befestigt ist.

5. Mulcheinheit nach Anspruch 4, **dadurch gekennzeichnet, dass** die Ablenkplatte (7) ein Hinterende aufweist, welches mit einem dreieckigen Fördermittel (9) versehen ist, das zu dem V-förmigen Ende (11, 12) ausgerichtet ist und diesem gegenüber liegt.

## Revendications

1. Unité de déchiquetage ou de paillage pour une tondeuse à gazon comprenant un bâti pourvu d'une plaque de coupe (1), au moins une lame de coupe (2) tournant en-dessous de ladite plaque (1) et un convoyeur d'expulsion (4) communiquant avec l'intérieur de ladite plaque de coupe (1) afin de convoyer l'herbe coupée vers une ouverture de sortie (5), comprenant une plaque déflectrice (7) pouvant être insérée dans la plaque de coupe (1) en glissant le long du convoyeur d'expulsion (4), une barre allongée (8) pour l'opération d'insertion et d'enlèvement de ladite plaque déflectrice (7), **caractérisée en ce qu'**elle comprend un joint articulé élastique (17, 18) pour la connexion entre une extrémité de ladite barre (8) et ladite plaque déflectrice (7) et des moyens d'accrochage élastiques (20) entre une poignée (19) située à l'autre extrémité de ladite barre (8) et le bâti de la tondeuse.

2. Unité de paillage selon la revendication 1, **caractérisée en ce que** ladite poignée (19) est pourvue de tiges élastiques (20) pour son ancrage à la machine.

3. Unité de paillage selon la revendication 1, **caractérisée en ce que** ledit joint articulé élastique (17, 18) comprend une vis (28) convenant pour empêcher ou permettre, en fonction de son état, la courbure de ladite barre (8) sur ladite plaque déflectrice (7).

4. Unité de paillage selon la revendication 1, **caractérisée en ce que** ladite plaque déflectrice (7) a une extrémité avant (11, 12) sensiblement en forme de V, convenant pour le couplage avec un convoyeur correspondant (25) fixé à la plaque de coupe (1).

5. Unité de paillage selon la revendication 4, **caractérisée en ce que** ladite plaque déflectrice (7) a une extrémité arrière pourvue d'un convoyeur triangulaire (9) aligné avec et opposé à ladite extrémité en forme de V (11, 12).
